# EUROPEAN PATENT SPECIFICATION

(11) **EP 2 437 014 B1**
(45) Date of publication and mention of the grant of the patent: **26.03.2014**
(21) Application number: 10796883.6
(22) Date of filing: 01.07.2010
(51) Int. Cl.: F25D 27/00

(54) **REFRIGERATOR**
KÜHLSCHRANK
RÉFRIGÉRATEUR

(30) Priority: 10.07.2009 JP 2009163444
(43) Date of publication of application: 04.04.2012
(73) Proprietor: Panasonic Corporation, Kadoma-shi Osaka 571-8501 (JP)
(72) Inventor: TANAKA, Masaaki, Osaka-shi Osaka 540-6207 (JP)
(74) Representative: Eisenführ Speiser
(86) International application number: PCT/JP2010/004337
(87) International publication number: WO 2011/004569

(56) References cited:
- WO-A1-03/010474
- JP-A- 2006 336 963
- JP-A- 2008 070 000
- JP-A- 2008 070 000
- JP-A- 2008 164 218
- JP-A- 2009 115 371
- JP-A- 2010 151 367

## Description

### [Technical Field]

The present invention relates to a refrigerator which realizes energy saving by predicting a placement state of food inside the refrigerator.

### [Background Art]

In recent years, a method using a pressure sensor has been suggested for achieving energy saving by detecting whether or not there is food inside a refrigerator and where the food is placed (for example, see Patent Literature 1).

A conventional refrigerator will be described below with reference to the drawings.

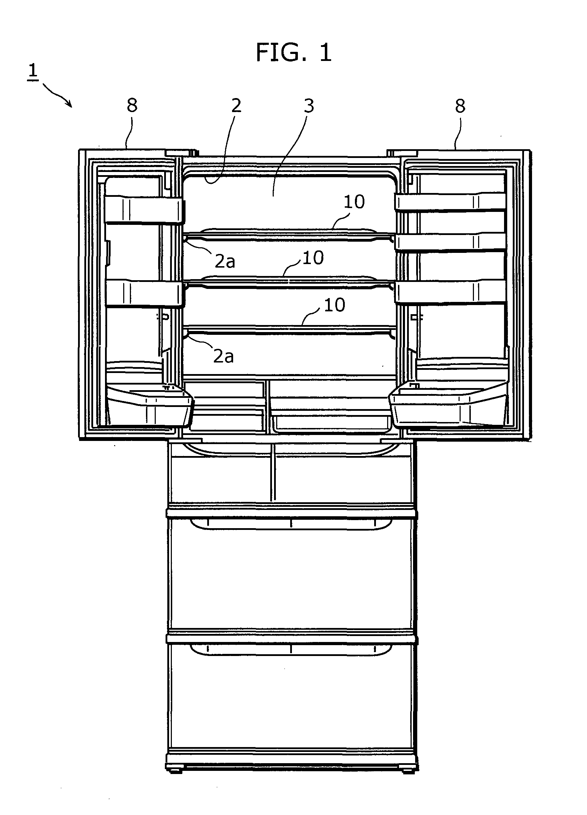

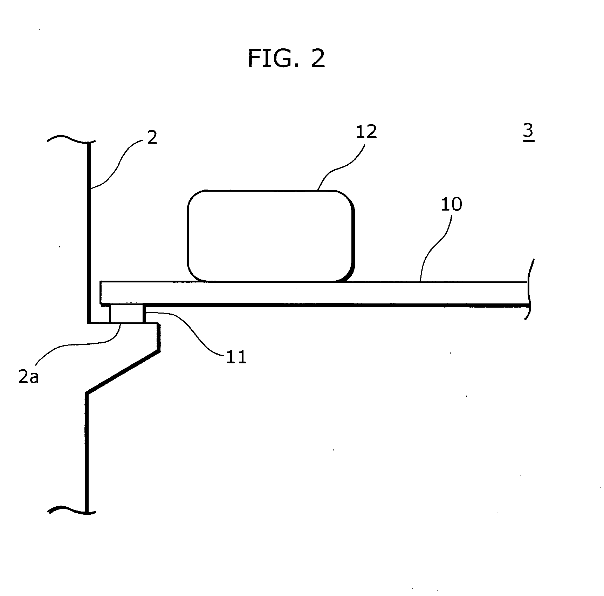

Fig. 1 is a front view of an example of the conventional refrigerator whose door is open. In addition, Fig. 2 is a front view of a main portion inside the refrigerator.

As shown in Fig. 1, a refrigerator 1 includes a plurality of storage compartments, of which a refrigerating compartment 3 has an interior portion vertically partitioned by a plurality of shelves 10 provided at appropriate intervals. More specifically, the shelves 10 are held, with each of side edges thereof placed on a shelf rest bead 2a having a convex shape and formed in a front-rear direction in a sidewall of an inner case 2 included in the refrigerating compartment 3.

In addition, as shown in Fig. 2, between the shelf 10 and the shelf rest bead 2a, a pressure sensor 11 is provided at a position corresponding to a corner portion of the shelf 10. More specifically, this pressure sensor 11 detects, with high accuracy, a load of food 12 that is placed on the shelf 10, and determines whether or not the food 12 is on the shelf 10.

Specifically, when opening and closing a door 8 for taking the food 12 in and out, the pressure sensor 11 reads the load of the food 12 on the shelf 10 and thereby determines whether or not the food 12 is on the shelf or a status of remaining storage capacity, and whether or not there is any other food that is newly stored.

By thus determining the position of the food from the load of the food and estimating where the food is placed, it is possible to reduce heat leakage caused by opening the door.

Document JP 2008 07 0000 A discloses a storage comprising a lighting device for lighting the inside of the storage compartment with an optimum light quality wherein a plurality of light emitting elements is provided and control is performed depending on a detection result of a lighting intensity detecting means for detecting light intensity outside of the storage. When the door of the storage is opened, lighting conditions outside are detected and the lighting intensity is defined for driving the plurality of the light emitting devices. The outside lighting intensity detecting means is operated upon detection of the open condition of the storage door. The inside of the storage can be lighted with optimum light quantity according to the brightness around the storage.

Document WO 03/010474 A1 discloses a refrigerator with interior lighting, wherein the refrigerator includes a light emitting device inside and both a light intensity sensor inside and outside of the compartment of the refrigerator. A control circuit comprises at least one setting element for setting the dependence between a detected brightness value and the power of the interior space lighting.

### Patent Literature

Patent Literature 1: Japanese Unexamined Patent Application Publication No. 2007-10208
Patent Literature 2: Japanese Unexamined Patent Application Publication No. 2008-07 0000
Patent Literature 3: international Patent Application Publication No. 03 / 010474 A1

### [Summary of Invention]

### [Technical Problem]

Here, to achieve energy saving in terms of lighting, it is necessary to adjust illuminance of lighting in consideration of the placement state of the food. More specifically, when a small amount of food is stored as compared to the case where a large amount of food is stored, it is possible to achieve energy saving by reducing an input of light to decrease illuminance.

However, the conventional refrigerator, which detects the placement state of food by load, does not allow detecting a ratio between a volume of food and storage space, because density differs depending on each food and it is therefore difficult to achieve energy saving while maintaining visibility at the same time.

Thus, an object of the present invention which is conceived in view of such a problem is to provide a refrigerator that achieves energy saving in lighting while maintaining visibility.

### [Solution to Problem]

To solve the conventional problem as described above, a refrigerator according to the present invention include: a storage compartment having a door; a lamp provided inside said storage compartment; an illuminance detection unit configured to detect illuminance of said lamp; an adjustment unit configured to adjust a quantity of light emission from said lamp, and a storing unit configured to store the quantity of light emission adjusted by said adjustment unit, wherein said adjustment unit is configured to adjust the quantity of light emission such that the higher the illuminance detected by said illuminance detection unit, the smaller the quantity of light emission, and is configured to cause said storing unit to store the quantity of light emission when said door is closed, and said refrigerator further comprises a lighting unit configured to turn on said lamp when said door is open, at the quantity of light emission stored in said storing unit.

With this, the control unit controls the quantity of light emission such that the higher the illuminance detected by the illuminance detection unit, the smaller the quantity of light emission. Here, it is possible to detect the placement state of food with reference to the illuminance detected by the illuminance detection unit. In other words, the illuminance is lower when larger food is placed, and the illuminance is higher when food is not placed. Then, when the detected illuminance is high for reasons that no food is placed and so on, the quantity of light emission of the lamp is adjusted to be smaller, to reduce illuminance so as to achieve energy saving in lighting. Thus, the placement state of the food can be detected with relatively high accuracy, so that it is possible to control electrical power for lighting so as to obtain only the light emission of the quantity required depending on the placement state of the food, thus achieving energy saving in lighting while maintaining visibility.

The refrigerator includes a storing unit which stores the quantity of light emission adjusted by the adjustment unit, and the adjustment unit causes the storing unit to store the quantity of light emission when the door is closed, and the refrigerator further includes a lighting unit which turns on the lamp when the door is open, at the quantity of light emission stored in the storing unit. More specifically, a quantity of light detected when the door is closed and having a small disturbance is stored, and the lamp is caused to emit light based on this stored quantity of light emission, when the door is open. This allows lighting with accurate illuminance without reducing visibility, thus achieving energy saving.

### [Advantageous Effects of Invention]

According to the present invention, it is possible to achieve energy saving by controlling electrical power for lighting and obtaining only the light emission of the quantity required depending on the placement state of the food through adjustment of electrical power for lighting, thus allowing reduction in electrical power for lighting without reducing visibility, so as to provide a refrigerator which achieves energy saving.

### [Brief Description of Drawings]

[Fig. 1] Fig. 1 is a front view of a conventional refrigerator.
[Fig. 2] Fig. 2 is a front view of a main portion inside the conventional refrigerator.
[Fig. 3] Fig. 3 is a front projection view of a refrigerator when a door is open, in an embodiment of the present invention.
[Fig. 4] Fig. 4 is a block diagram showing a functional configuration of a control unit in the present embodiment.

### [Description of Embodiments]

A first aspect of to the present invention is a refrigerator according: a storage compartment having a door; a lamp provided inside said storage compartment; an illuminance detection unit configured to detect illuminance of said lamp; an adjustment unit configured to adjust a quantity of light emission from said lamp, and a storing unit configured to store the quantity of light emission adjusted by said adjustment unit, wherein said adjustment unit is configured to adjust the quantity of light emission such that the higher the illuminance detected by said illuminance detection unit, the smaller the quantity of light emission, and is configured to cause said storing unit to store the quantity of light emission when said door is closed, and said refrigerator further comprises a lighting unit configured to turn on said lamp when said door is open, at the quantity of light emission stored in said storing unit.

Specifically, when large-size food or a large amount of food is stored, light from the lamp is blocked, so that the illuminance detection unit detects higher illuminance; when small-size food or a small amount of food is stored, a larger quantity of light leaks from a periphery of the food, so that the illuminance detection unit detects lower illuminance. Thus, when the detected illuminance is low, a normal input of electricity is provided to the lamp to maintain the quantity of light emission from the lamp, and when the detected illuminance is high, a reduced input of electricity is provided to the lamp to decrease the quantity of light emission, thus achieving energy saving without reducing visibility.

In addition, in the refrigerator, by providing each shelf with the illuminance detection unit and the lamp for illuminating the shelf, it is possible to illuminate the shelf with the normal input of electricity when a large amount of food is placed on the shelf, and to illuminate the shelf with the reduced input of electricity when a small amount of food is placed on the shelf, thus realizing a refrigerator which achieves energy saving.

The refrigerator includes a storing unit which stores the quantity of light emission adjusted by the adjustment unit, and the adjustment unit causes the storing unit to store the quantity of light emission when the door is closed, and the refrigerator further includes a lighting unit which turns on the lamp when the door is open, at the quantity of light emission stored in the storing unit. More specifically, a quantity of light detected when the door is closed and having a small disturbance is stored, and the lamp is caused to emit light based on this stored quantity of light emission, when the door is open. This allows lighting with accurate illuminance without reducing visibility, thus achieving energy saving.

A second aspect of the present invention is a refrigerator which includes a space for storing food, between the illuminance detection unit and the lamp. With this, light from the lamp reaches the illuminance detection unit from behind the food, and this increases accuracy in detecting the placement state of the food and allows energy saving with less reduction in visibility.

A third aspect of the present invention is a refrigerator in which the lamp is provided in a front portion of the storage compartment, and the illuminance detection unit is provided in a back surface inside the storage compartment. In addition to facilitating the detection of the placement state of food, this allows use of outside light entering from the door. In other words, when the outside light is strong, it is possible to reduce the input of electrical power to the lamp, thus achieving energy saving in lighting while causing less reduction in visibility.

A fourth aspect of the present invention is a refrigerator in which the illuminance detection unit detects a first detected quantity which is the illuminance of the lamp detected when the door is closed and the lamp is turned on, the adjustment unit adjusts the quantity of light emission from the lamp to a first light emission quantity such that the larger the first detected quantity, the smaller the quantity of light emission, the illuminance detection unit further detects a second detected quantity when the door is open and the lamp is turned on at the first light emission quantity, the second detected quantity being illuminance of light obtained by adding a quantity of light entering from outside to the quantity of light emission from the lamp, and the adjustment unit further adjusts the first light emission quantity to a second light emission quantity such that the larger the second detected quantity, the smaller the quantity of light emission from the lamp. This allows reduction in quantity of light emission in consideration of the quantity of outside light that is disturbance which enters when the door is open. In other words, when the outside light is strong, it is possible to further reduce the input of electrical power to the lamp, thus achieving energy saving in lighting while causing less reduction in visibility.

Hereinafter, an embodiment of the present invention will be described with reference to the drawings. In addition, the present invention is not limited by this embodiment.

### [Embodiment]

Hereinafter, an embodiment of the present invention will be described with reference to the drawings.

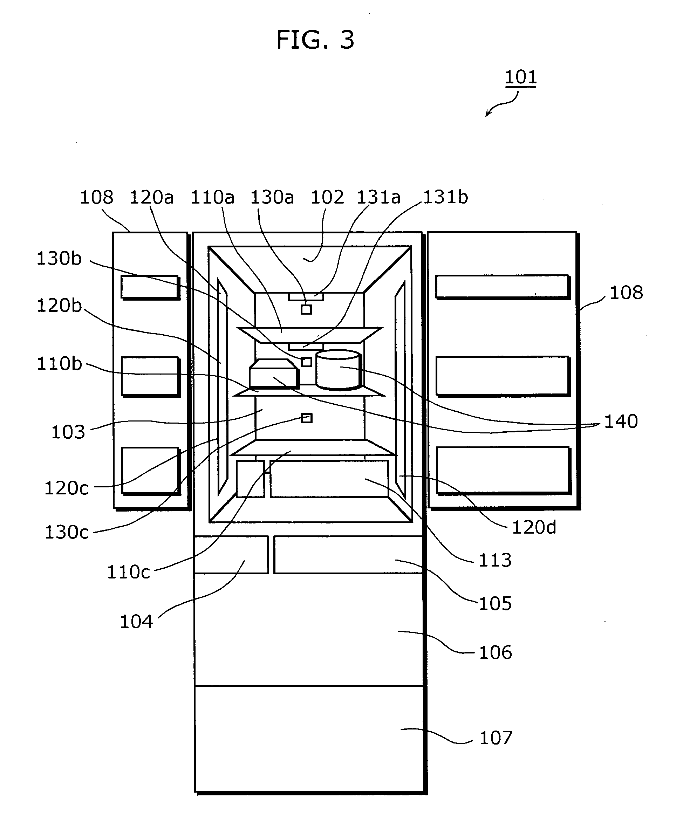

Fig. 3 is a front projection view of a refrigerator 101 according to the embodiment of the present invention.

As shown in the figure, the refrigerator 101 includes, via a heat insulating wall, an inner case 102 in which a plurality of storage compartments, that is, from the top, a refrigerating compartment 103, an ice compartment 104, a vegetable compartment 106, and a freezing compartment 107 are arranged, and beside the ice compartment 104, a switching compartment 105 which allows switching the temperature inside to different levels of temperature is also provided.

The compartment most frequently used for taking a storage item in and out and having a largest storage capacity is the refrigerating compartment 103 whose opening in a front face is covered by a door 108 which is a double rotatable door pivotally supported by hinges at both sides, and a pull-out door is provided at each of the ice compartment 104, the switching compartment 105, the vegetable compartment 106, and the freezing compartment 107.

In addition, the refrigerator 101 includes a microcomputer, including a control unit 200 in a back face of a main body. Details of the configuration of the control unit 200 will be described later.

The refrigerating compartment 103 includes a storage section partitioned by a plurality of shelves 110a, 110b, and 110c which partition, at appropriate intervals, an interior portion maintained at a refrigeration temperature. The refrigerating compartment 103 includes, at the bottom, a water feed tank which supplies water for ice making into the ice compartment 104, and a low temperature compartment 113 which maintains the temperature at what is called a "chilled" temperature.

Each of the shelves 110a, 110b, and 110c is a plate-shaped rectangular body formed by injecting a synthetic resin material, and is held by a shelf rest having a convex shape and formed in a front-rear direction in a sidewall of the inner case 102 included in the refrigerating compartment 103.

The refrigerating compartment 103 includes, in a front portion of an internal surface thereof, a lamp 120 which includes a plurality of LEDs vertically arranged at regular intervals. Specifically, the lamp 120 is formed of LEDs, including: an upper LED 120a which mainly illuminates a storage section above the shelf 110a; a middle LED 120b which mainly illuminates a storage section above the shelf 110b; a lower LED 120c which mainly illuminates a storage section above the shelf 110c; and a bottom LED 120d which is provided in the low temperature compartment 113 that is a storage section at the bottom. The electrical input to each LED can be independently controlled by the control unit 200.

In addition, in the back surface inside the refrigerating compartment 103, the illuminance sensor 130 that detects the illuminance (quantity of light) of the lamp 120 is provided. Specifically, the illuminance sensor 130 is included as an upper illuminance sensor 130a in the storage section above the shelf 110a, a middle illuminance sensor 130b in the storage section above the shelf 110b, and a lower illuminance sensor 130c in the storage section above the shelf 110c, each of which is provided in a corresponding one of a center of a height between shelves and in a center portion in a width direction.

In other words, the refrigerator 101 includes a space for storing food between the illuminance sensor 130 that is one of the upper illuminance sensor 130a, the middle illuminance sensor 130b, and the lower illuminance sensor 130c, and the lamp 120, which is a corresponding one of the upper LED 120a, the middle LED 120b, and the lower LED 120c. Note that the figure shows a state in which food 140 is placed on the middle shelf.

Note that the illuminance sensor 130 (the upper illuminance sensor 130a, the middle illuminance sensor 130b, and the lower illuminance sensor 130c) is included in the "illuminance detection unit" described in the Claims of the present Description.

In addition, above the illuminance sensor 130, a cool air outlet is provided. Specifically a cool air outlet 131a is provided near and above the upper illuminance sensor 130a, and a cool air outlet 131b is provided near and above the middle illuminance sensor 130b.

Next, a configuration of the control unit 200 will be described.

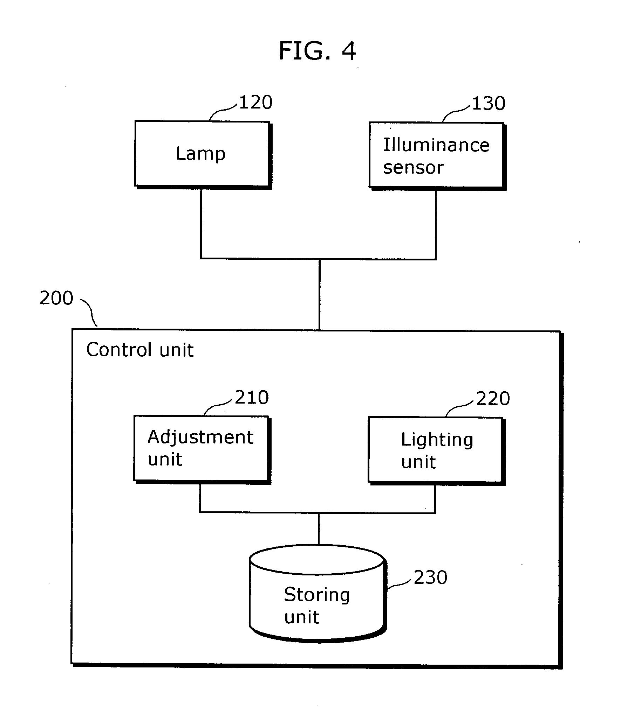

Fig. 4 is a block diagram showing a functional configuration of the control unit 200 in the present embodiment.

As shown in the figure, the control unit 200 includes an adjustment unit 210, a lighting unit 220, and a storing unit 230.

The adjustment unit 210 is a processing unit capable of adjusting the quantity of light emission from the lamp 120 according to the quantity of light detected by the illuminance sensor 130. In other words, the adjustment unit 210 independently controls the quantity of light emission from the LED corresponding to each of the storage sections, according to the detection by the illuminance sensor 130 provided in the storage section.

Specifically, the adjustment unit 210 adjusts the quantity of light emission from the lamp 120 such that the higher the illuminance detected by the illuminance sensor 130, the smaller the quantity of light emission from the lamp 120. For example, for causing the lamp 120 to emit light in a state where the door is closed, a first detected quantity that is detected by the illuminance sensor 130 is preset to a plurality of levels according to the quantity of light emission from the lamp 120. According to the first detected quantity, the quantity of light emission from the lamp 120 is preset according to the first detected quantity, at a plurality of levels such that the higher the illuminance detected by the illuminance sensor 130, the smaller the quantity of light emission from the lamp 120. With this, the lamp emits light at a first light emission quantity according to the first detected quantity.

In addition, when the door 108 is open, that is, when a door switch and the like detect that the door 108 is open, it is possible to allow the adjustment unit 210 to adjust lighting with higher accuracy when using the illuminance sensor 130 for detecting the quantity of light entering from the outside.

In this case, the illuminance sensor 130 detects, as the second detected quantity, a quantity of light that is a sum of the quantity of light emission from the lamp 120 emitting light at the first light emission quantity and the quantity of light entering from outside, in a state where the door 108 is open. According to the second detected quantity, the quantity of light emission from the lamp 120 and is preset to the first light emission quantity is adjusted in further detail so that the lamp 120 emits light at a second light emission quantity.

Also in this case, the quantity of light emission from the lamp 120, which corresponds to the second detected quantity, is preset to the plurality of levels such that the higher the illuminance detected by the illuminance sensor 130 according to the second detected quantity, the smaller the quantity of light emission from the lamp 120. Note that more accurate control is possible when the quantity of light which is adjusted to the plurality of levels according to the second light emission quantity can be adjusted by a light quantity width smaller than or equal to the quantity of light that is adjusted to the plurality of levels according to the first light emission quantity, thus achieving energy saving in lighting.

In addition, the adjustment unit 210 causes the storing unit 230 to store the quantity of light emission, when the door 108 is closed.

The storing unit 230 is a memory that stores the quantity of light emission from the lamp 120, which is adjusted by the adjustment unit 210. In addition, the storing unit 230 also stores data detected by the illuminance sensor 130.

The lighting unit 220 turns on the lamp 120 at the light emission quantity held by the storing unit 230, when the door 108 is open. Specifically, the lighting unit 220, when detecting that the door 108 is open, turns on the lamp 120 at the light emission quantity stored in the storing unit 230.

For the refrigerator configured as above, the operation performed by the control unit 200 will be described below.

The lighting unit 220 of the control unit 200, when detecting that the door 108 is closed, turns on the upper LED 120a, the middle LED 120b, and the lower LED 120c in the lamp 120. In the upper shelf 110a and the lower shelf 110c, the light from the lamp 120 reaches the upper illuminance sensor 130a and the lower illuminance sensor 130c, respectively, via cool air.

In the middle shelf 110b, part of the light from the middle LED 120b that is the lamp 120 passes between the food 140 to reach the middle illuminance sensor 130b. Some other part hits the food 140 to be absorbed by the food 140, and some other part is reflected and scattered, so that an opposite side of the lamp 120 with respect to the food 140 is dark with a smaller quantity of light.

Then, the adjustment unit 210 of the control unit 200 independently controls the electrical power of the lamp 120 in each shelf until the illuminance sensor 130 in the shelf detects the predetermined quantity of light. Specifically, the adjustment unit 210 reduces an electrical input to the upper LED 120a in the upper shelf and the lower LED 120c in the lower shelf, and maintains the normal input of electricity to the middle LED 12b in the middle shelf. The adjustment unit 210 stores a value of electricity (light emission quantity) input to the lamp 120 in each shelf at this time.

Subsequently, the adjustment unit 210 turns off the lamp 120 after an elapse of a predetermined period of time. Then, the lighting unit 220, when detecting that the door 108 is open, provides the value of the input electricity that is previously stored in the storing unit 230 to the upper LED 120a, the middle LED 120b, and the lower LED 120c, each of which is the lamp 120 provided in each shelf. For the low temperature compartment 113 in a quasi-sealed storage section at the bottom, the lighting unit 220 turns on the bottom LED 120d as conventionally.

Subsequently, the lighting unit 220, when detecting that the door 108 is closed, turns on the lamp 120 again at a given quantity of light for a given period of time, so as to detect a placement and storage state of the food that is placed on the upper shelf 110a, the middle shelf 110b, and the lower shelf 110c, and the adjustment unit 210 determines and stores into the storing unit 230 in advance, the illuminance of the lamp 120 in each shelf for opening the door 108 next time.

In addition, when the outside light is strong when opening the door 108, the input of electrical power to the lamp 120 is gradually decreased until the illuminance sensor 130 detects a predetermined quantity of light.

As described above, the electrical power to the lamp 120 at the time of opening the door 108 is input so as to be emitted at an appropriate quantity of light according to the storage state of the food, thus allowing energy saving without idle emission, and without reducing conventional visibility.

Specifically, when a large food or a large amount of food is stored, light from the lamp 120 is blocked, so that the illuminance sensor 130 detects a smaller quantity of light; when a small food or a small amount of food is stored, a quantity of light that leaks from a periphery of the food increases, so that the illuminance detection sensor 130 detects a larger quantity of light. Using this detection result, a normal input of electricity is provided to maintain the quantity of light emission from the lamp when the detected quantity of light is small, and a reduced input of electricity is provided to decrease the quantity of light emission from the lamp when the detected quantity of light is large, thus realizing further energy saving without reducing visibility.

In addition, in the refrigerating compartment 103, by providing the illuminance sensor 130 in each of the shelves 110a to 110c, and providing the lamp 120 that illuminates each of the shelves 110a to 110c, it is possible to provide a normal input of electricity to the lamp 120 in a shelf on which a large amount of food is stored, and to provide a reduced input of electricity to the lamp 120 that illuminates a shelf on which a smaller amount of food is placed, thus realizing a refrigerator which achieves further energy saving.

Particularly, as with the case of a refrigerator for household use, which is more likely to store a variety of food, such a refrigerator can detect the storage state of food with high accuracy and is more likely to produce an energy saving effect compared to the conventional refrigerator.

In addition, when the lighting unit 200 turns on the lamp 120 with the door 108 closed, the larger the food 140, or the larger the amount of food storage, the more light from the lamp 120 is blocked, and the quantity of light that reaches the illuminance sensor 130 behind the food is further reduced.

Thus, the illuminance sensor 130 functions as a detection unit which detects, without contact, a free space in the storage space inside the storage compartment.

Then, the control unit 200 thus detects the quantity of light using the illuminance sensor 130, and displays, on a display unit (not shown) provided in an outer surface of the door 108, to indicate a space available for storing in the upper shelf compared to the lower shelf. In other words, the control unit 200 notifies a user of the state of the storage item inside the refrigerating compartment 103 by causing the display unit to display the state of the storage item in the outer surface of the door 108 provided in a front portion of the refrigerating compartment 103.

The user, when recognizing the display on the display unit, is able to open the door 108, place the food without hesitation on the shelf 110a that is a storage space on the top shelf displayed as containing a smaller amount of storage items, and close the door 108 quickly.

In addition, when the food 140 is stored in front of the cool air outlet 131b as is on the shelf 110b, or when too much food is stuffed, that is, when the quantity of light detected by the illuminance sensor 130 near the cool air outlet is lower than the predetermined value, the control unit 200 displays that the storage space detected by a corresponding illuminance sensor 130 is overloaded, and that more electricity is used for operation.

Here, in the case of overloading of the food 140 or storing the food 140 near the cool air outlet, the food 140 becomes resistant to a cool air flow, which decreases an amount of cool air circulation per unit time, and increases time for cooling. In addition, the decrease in the cool air circulation causes decrease in airflow in the evaporator, which further decreases the amount of heat exchange and accordingly decreases evaporation temperature, thus causing increase in input to the compressor due to increased differential pressure between low and high pressures of the refrigerating cycle. In order to maintain cooling time, it is necessary to increase a rotation frequency of the fan that circulates cool air or increase the rotation frequency of the compressor, which also requires more electricity.

Thus, by making the user aware of the tendency of power increase which requires more electricity and prompting the user to place the food appropriately, it is possible, in practical use of the refrigerator, to achieve energy saving, provide consumers with a refrigerator which realizes further energy saving, and contribute to CO₂ reduction.

As described above, this reduces an amount of time for opening the door 108, which saves energy by suppressing the outside air of high temperature entering from the door 108, and also allows suppressing temporal increase in the temperature in the refrigerating compartment 130, thus suppressing increase in temperature of the food to reduce quality deterioration.

Furthermore, it is possible to inform the user, by the display unit, that more electricity is used for operation, thus calling for attention for energy-saving operation.

As described above, the refrigerator 101 according to the present embodiment includes: the refrigerating compartment 103 that is a storage compartment having the door 108, the cool air outlets 131a and 131b each of which discharges cool air into the refrigerating compartment 103, and the illuminance sensor 130 which is provided inside the refrigerating compartment 103 and is also a detection unit that detects, without contact, a free space within the storage space of the refrigerating compartment 103, with the illuminance sensor 130 provided at a position that allows detecting at least a capacity of the space near the cool air outlets 131a and 131b, so that it is possible to easily find the position of the free space and recognize the food storage from outside, and to achieve energy saving. Furthermore, it is possible to provide a refrigerator that realizes energy-saving operation by notifying the user that more electricity is used due to overloading of food or storing the food near the cool air outlets 131a and 131b so as to prompt the user to place the food appropriately.

In other words, use of the illuminance sensor 130 allows non-contact detection of a ratio of food volume including a height direction of the food with respect to the storage space. This allows detecting the state of the free space with relatively high accuracy, and accordingly facilitates recognizing where in the storage space in the refrigerator is available. This allows storing food quickly and reduces the time for opening the door 108, thus suppressing increase in temperature inside the refrigerator as a result of opening the door.

Furthermore, when the food is placed near the cool air outlets 131a and 131b, even if there is sufficient storage space, an amount of discharge of cool air is reduced, to cause a delay in cooling of the food, which accordingly causes decrease in cooling efficiency inside the refrigerating compartment 10, so that energy consumption increases. In addition, there is another concern that the food placed near the cool air outlets 131a and 131b might be deteriorated due to drying or overcooling by a large amount of cool air flowing toward the food. The refrigerator 101 according to an implementation of the present invention, however, can preferentially indicate another storage space for storing food, and thus can suppress food deterioration to a minimum. At the same time, it is possible to prompt energy-saving operation by notifying the user that more electricity is used in the case of overloading of food or storing the food near the cool air outlets 131a and 131b.

In addition, a free space inside the storage space of the refrigerating compartment 103 is detected using the illuminance sensor 130, based on the change in quantity of the light emitted from the lamp 120 provided in the refrigerating compartment 103. In this context, when large-size food or a large amount of food is stored, light from the lamp 120 is blocked, so that the illuminance sensor 130 detects a smaller quantity of light; when small-size food or a small amount of food is stored, a larger quantity of light leaks from a periphery of the food, so that the illuminance sensor 130 detects a larger quantity of light.

Thus, this allows the user to find free space easily and store food smoothly from outside, and also allows notifying the user that more electricity is used due to overloading of food or storing the food near the cool air outlets 131a and 131b. In addition, this allows quantifying the amount of the detected light into a voltage output with ease at small cost, thus facilitating control.

In addition, since there is a storage space for storing food between the illuminance sensor 130 and the lamp 120, it is possible to find free space easily and store the food smoothly from outside, and also to notify that more electricity is used due to overloading of food or storing the food near the cool air outlets 131a and 131b. In addition, since the light from the lamp 120 passes, via food, to reach the illuminance sensor 130, the variation in the amount of the transmitted light is more likely to depend on variation in the volume of the stored food, thus improving accuracy in detecting the free space.

In addition, the lamp 120 is provided in a front portion of the refrigerating compartment 103, and the cool air outlets 131a and 131b are provided in a back face portion inside the refrigerating compartment 103; this allows the user to find free space easily and to store food smoothly from outside, and also allows notifying the user that more electricity is used due to overloading of food or storing the food near the cool air outlets 131a and 131b. In addition, even if the door 108 is not completely closed, that is, even if outside light enters the refrigerating compartment 103, it is possible to detect free space, and this further increases detection accuracy.

In addition, since the display unit is included which displays, in an outer surface of the door 108 provided in the front surface of the refrigerating compartment 103, the information of the free space in the storage space estimated from the detection by the illuminance sensor 130, it is possible to find free space easily and store food smoothly from outside. In addition, this also allows notifying the user that more electricity is used due to overloading of food or storing food near the cool air outlets 131a and 131b as well as roughly obtaining, before opening the door 108, an idea about where to place the food stored from outside, thus allowing further reduction in time for opening the door.

In addition, since the information on the free space inside the storage space, which is displayed on the display unit, is intended to warn the overloading of the food, it is possible to find free space easily and store the food smoothly from outside, and also notify the user that more electricity is used due to overloading of food or storing the food near the cool air outlets 131a and 131b. In addition, this allows the user to easily recognize that more electricity is used for operation.

Thus far, the refrigerator according to the present invention has been described with reference to the embodiment above, but the present invention is not limited to this embodiment.

In other words, the embodiment disclosed herein should be considered not limitative but illustrative in all aspects. The scope of the present invention is described not by the description above but by the claims, and is intended to include all the variations and modifications possible within the meaning and scope equivalent to those of the claims.

For example, in the embodiment above, the refrigerator 101 only needs to include, inside the refrigerating compartment 103, at least the lamp 120, the illuminance sensor 130, and the control unit 200, and that control unit 200 only needs to include at least the adjustment unit 210. In other words, the refrigerator 101 can adjust the quantity of light emission using the adjustment unit 210 such that the higher the illuminance detected by the illuminance sensor 130, the smaller the quantity of light emission from the lamp 120.

### [Industrial Applicability]

A refrigerator according to the present invention is applicable to a refrigerator for home use which includes a plurality of storage spaces.

### [Reference Signs List]

- 1, 101: Refrigerator
- 2, 102: Inner case
- 2a: Shelf rest bead
- 3, 103: Refrigerating compartment
- 8, 108: Door
- 10, 110a, 110b, 110c: Shelf
- 11: Pressure sensor
- 12, 140: Food
- 104: Ice compartment
- 105: Switching compartment
- 106: Vegetable compartment
- 107: Freezing compartment
- 113: Low temperature compartment
- 120: Light
- 120a: Upper LED
- 120b: Middle LED
- 120c: Lower LED
- 120d: Bottom LED
- 130: Illuminance sensor
- 130a: Upper illuminance sensor
- 130b: Middle illuminance sensor
- 130c: Lower illuminance sensor
- 131a, 131b: Cool air outlet
- 200: Control unit
- 210: Adjustment unit
- 220: Lighting unit
- 230: Storing unit

## Claims

1. A refrigerator comprising:
a storage compartment having a door (108);
a lamp (120a, 120b, 120c) provided inside said storage compartment (103);
an illuminance detection unit (130, 130a, 130b, 130c) configured to detect illuminance of said lamp(120a, 120b, 120c);
an adjustment unit (210) configured to adjust a quantity of light emission from said lamp (120a, 120b, 120c), and
a storing unit (230) configured to store the quantity of light emission adjusted by said adjustment unit (210),
wherein said adjustment unit (210) is configured to adjust the quantity of light emission such that the higher the illuminance detected by said illuminance detection unit (130, 130a, 130b, 130c), the smaller the quantity of light emission, and
is configured to cause said storing unit (230) to store the quantity of light emission when said door (108) is closed, and
said refrigerator (101) further comprises
a lighting unit (202) configured to turn on said lamp (120a, 120b, 120c) when said door (108) is open, at the quantity of light emission stored in said storing unit (230).

2. The refrigerator according to claim 1, further comprising
a space (110a, 110b, 110c) for storing food, between said illuminance detection unit (130, 130a, 130b, 130c) and said lamp (120a, 120b, 120c).

3. The refrigerator according to any one of claims 1 and 2,
wherein said lamp (120a, 120b, 120c) is provided in a front portion of said storage compartment (103), and
said illuminance detection unit (130, 130a, 130b, 130c) is provided in a back surface inside said storage compartment (103).

4. The refrigerator according to any one of claims 1 to 3,
wherein said illuminance detection unit (130, 130a, 130b, 130c) is configured to detect a first detected quantity which is the illuminance of said lamp (120a, 120b, 120c) detected when said door (108) is closed and said lamp (120a, 120b, 120c) is turned on,
said adjustment unit (210) is configured to adjust the quantity of light emission from said lamp (120a, 120b, 120c) to a first light emission quantity such that the larger the first detected quantity, the smaller the quantity of light emission from said lamp (120a, 120b, 120c),
said illuminance detection unit (130, 130a, 130b, 130c) is further configured to detect a second detected quantity when said door (108) is open and said lamp (120a, 120b, 120c) is turned on at the first light emission quantity, the second detected quantity being illuminance of light obtained by adding a quantity of light entering from outside to the quantity of light emission from said lamp (120a, 120b, 120c), and
said adjustment unit (210) is further configured to adjust the first light emission quantity to a second light emission quantity such that the larger the second detected quantity, the smaller the quantity of light emission from said lamp (120a, 120b, 120c).

## Patentansprüche

1. Kühlschrank umfassend:
ein Staufach mit einer Tür (108);
eine Lampe (120a, 120b, 120c) angeordnet im Inneren des Staufachs (103);
eine Beleuchtungsstärkenerfassungseinheit (130, 130a, 130b, 130c) eingerichtet zum Erfassen einer Beleuchtungsstärke der Lampe (120a, 120b, 120c);
eine Einstelleinheit (210) eingerichtet zum Einstellen einer Lichtaustrittsmenge der Lampe (120a, 120b, 120c), und
eine Speichereinheit (230) eingerichtet zum Speichern der Lichtaustrittsmenge, die von der Einstelleinheit (210) eingestellt ist,
wobei die Einstelleinheit (210) derart zum Einstellen der Lichtaustrittsmenge eingerichtet ist, dass je größer die von der Beleuchtungsstärkenerfassungseinheit (130, 130a, 130b, 130c) erfasste Beleuchtungsstärke, desto kleiner die Lichtaustrittsmenge, und
eingerichtet ist zum Veranlassen der Speichereinheit (230), die Lichtaustrittsmenge zu speichern, wenn die Tür (108) geschlossen ist, und
wobei der Kühlschrank (101) ferner umfasst
eine Beleuchtungseinheit (202) eingerichtet zum Anschalten der Lampe (120a, 120b, 120c), wenn die Tür (108) offen ist, auf eine Lichtaustrittsmenge, die in der Speichereinheit (230) gespeichert ist.

2. Kühlschrank nach Anspruch 1, ferner umfassend
einen Raum (110a, 110b, 110c) zum Aufnehmen von Lebensmitteln, zwischen der Beleuchtungsstärkenerfassungseinheit (130, 130a, 130b, 130c) und der Lampe (120a, 120b, 120c).

3. Kühlschrank nach einem der Ansprüche 1 und 2,
wobei die Lampe (120a, 120b, 120c) in einem Vorderbereich des Staufachs (103) angeordnet ist, und
wobei die Beleuchtungsstärkenerfassungseinheit (130, 130a, 130b, 130c) in einer hinteren Oberfläche im Inneren des Staufachs (103) angeordnet ist.

4. Kühlschrank nach einem der Ansprüche 1 bis 3,
wobei die Beleuchtungsstärkenerfassungseinheit (130, 130a, 130b, 130c) eingerichtet ist zum Erfassen einer ersten erfassten Menge, die der Beleuchtungsstärke der Lampe (120a, 120b, 120c) entspricht, die erfasst ist, wenn die Tür (108) geschlossen ist und die Lampe (120a, 120b, 120c) angeschaltet ist,
wobei die Einstelleinheit (210) eingerichtet ist, die Lichtaustrittsmenge der Lampe (120a, 120b, 120c) derart auf eine erste Lichtaustrittsmenge einzustellen, dass je größer die erste erfasste Menge, desto kleiner die Lichtaustrittsmenge der Lampe (120a, 120b, 120c),
wobei die Beleuchtungsstärkenerfassungseinheit (130, 130a, 130b, 130c) weiter eingerichtet ist zum Erfassen einer zweiten Menge, wenn die Tür (108) geöffnet ist und die Lampe (120a, 120b, 120c) auf die erste Lichtaustrittsmenge angeschaltet ist, wobei die zweite erfasste Menge einer Beleuchtungsstärke entspricht, die Erhalten wird durch Hinzufügen einer von außen eintretenden Beleuchtungsmenge zu der Lichtaustrittsmenge der Lampe (120a, 120b, 120c), und
wobei die Einstelleinheit (210) ferner eingerichtet ist, die erste Lichtaustrittsmenge derart auf eine zweite Lichtaustrittsmenge einzustellen, dass je größer die zweite erfasste Menge, desto kleiner die Lichtaustrittsmenge der Lampe (120a, 120b, 120c).

## Revendications

1. Réfrigérateur comprenant :
un compartiment de stockage ayant une porte (108) ;
une lampe (120a, 120b, 120c) prévue à l'intérieur dudit compartiment de stockage (103) ;
une unité de détection d'éclairement (130, 130a, 130b, 130c) configurée pour détecter l'éclairement de ladite lampe (120a, 120b, 120c) ;
une unité de réglage (210) configurée pour régler une quantité d'émission de lumière à partir de ladite lampe (120a, 120b, 120c), et
une unité de stockage (230) configurée pour stocker la quantité d'émission de lumière réglée par ladite unité de réglage (210),
dans lequel ladite unité de réglage (210) est configurée pour régler la quantité d'émission de lumière de sorte que plus l'éclairement détecté par ladite unité de détection d'éclairement (130, 130a, 130b, 130c) soit important, plus la quantité d'émission de lumière soit faible, et
est configurée pour amener ladite unité de stockage (230) à stocker la quantité d'émission de lumière lorsque ladite porte (108) est fermée, et
ledit réfrigérateur (101) comprend en outre
une unité d'éclairage (202) configurée pour allumer ladite lampe (120a, 120b, 120c) lorsque ladite porte (108) est ouverte, à la quantité d'émission de lumière stockée dans ladite unité de stockage (230).

2. Réfrigérateur selon la revendication 1, comprenant en outre
un espace (110a, 110b, 110c) destiné à stocker des aliments, entre ladite unité de détection d'éclairement (130, 130a, 130b, 130c) et ladite lampe (120a, 120b, 120c).

3. Réfrigérateur selon l'une quelconque des revendications 1 et 2,
dans lequel ladite lampe (120a, 120b, 120c) est prévue dans une partie avant dudit compartiment de stockage (103), et
ladite unité de détection d'éclairement (130, 130a, 130b, 130c) est prévue dans une surface arrière à l'intérieur dudit compartiment de stockage (103).

4. Réfrigérateur selon l'une quelconque des revendications 1 à 3,
dans lequel ladite unité de détection d'éclairement (130, 130a, 130b, 130c) est configurée pour détecter une première quantité détectée qui est l'éclairement de ladite lampe (120a, 120b, 120c) détecté lorsque ladite porte (108) est fermée et ladite lampe (120a, 120b, 120c) est allumée,
ladite unité de réglage (210) est configurée pour régler la quantité d'émission de lumière à partir de ladite lampe (120a, 120b, 120c) à une première quantité d'émission de lumière de sorte que plus la première quantité détectée soit importante, plus la quantité d'émission de lumière à partir de ladite lampe (120a, 120b, 120c) soit faible,
ladite unité de détection d'éclairement (130, 130a, 130b, 130c) est en outre configurée pour détecter une deuxième quantité détectée lorsque ladite porte (108) est ouverte et ladite lampe (120a, 120b, 120c) est allumée à la première quantité d'émission de lumière, la deuxième quantité détectée étant l'éclairement de lumière obtenu en ajoutant une quantité de lumière entrant depuis l'extérieur à la quantité d'émission de lumière à partir de ladite lampe (120a, 120b, 120c), et
ladite unité de réglage (210) est en outre configurée pour régler la première quantité d'émission de lumière à une deuxième quantité d'émission de lumière de sorte que plus la deuxième quantité détectée soit importante, plus la quantité d'émission de lumière à partir de ladite lampe (120a, 120b, 120c) soit faible.
